# EUROPEAN PATENT SPECIFICATION

(11) **EP 1 825 142 B1**
(45) Date of publication and mention of the grant of the patent: **27.04.2011**
(21) Application number: 05856399.0
(22) Date of filing: 29.09.2005
(51) Int. Cl.: F04B 27/08, F04B 27/10

(54) **VARIABLE DISPLACEMENT SWASH PLATE TYPE COMPRESSOR WITH SMOOTH INCLINED MOVING FEATURE**
TAUMELSCHEIBENVERDICHTER MIT VARIABLER VERDRÄNGUNG MIT LEICHT SCHRÄGEM, BEWEGLICHEM MERKMAL
COMPRESSEUR A PLATEAU INCLINE A DEPLACEMENT VARIABLE AVEC UNE CARACTERISTIQUE DE MOUVEMENT INCLINE SOUPLE

(30) Priority: 14.12.2004 KR 20040105444
(43) Date of publication of application: 29.08.2007
(73) Proprietor: Doowon Technical College, Juksan-myon Anseing-shi Kyonggi do 456-893 (KR); Doowon Electronic Co., Ltd., Asan-shi, Chungnam 336 - 821 (KR)
(72) Inventor: LEE, Geon-Ho, 108-102, Park Town Seo-an Apt., Seongnam-si, Gyeonggi-do, 463-730 (KR); PARK, Ik-Seo, Seo-gu, Incheon, 404-250 (KR); HAN, Young-Chang, 102-902, Ajung Lotte Apt., Jeonju-si, Jeollabuk-do, 561-222 (KR)
(74) Representative: Tetzner, Michael
(86) International application number: PCT/KR2005/003227
(87) International publication number: WO 2006/085709

(56) References cited:
- EP-A- 1 043 500
- JP-A- 2001 289 159
- KR-A- 890 002 548
- KR-A- 20020 039 142
- KR-A- 20020 039 142
- KR-A- 20020 039 144
- US-A- 5 231 914

## Description

### Technical Field

The present invention relates to a variable displacement swash plate type compressor with a smooth inclined moving feature, and more particularly, to a variable displacement swash plate type compressor having a swash plate capable of smoothly moving in an inclined state without being lifted.

### Background Art

A conventional swash plate type compressor, which is widely used as a compressor of an air conditioner for an automobile, includes a disk-shaped swash plate having a certain inclination and fixedly installed at a drive shaft for transmitting thee power of an engine by being rotated by the drive shaft, and a plurality of pistons installed around the outer perimeter of the swash plate by interposing shoes between the swash plate and the pistons. By rotation of the swash plate, the pistons are reciprocated in a straight line in a plurality of cylinder bores formed in a cylinder block, thereby sucking, compressing, and discharging refrigerant gas.

Recently, a variable displacement swash plate type compressor has been proposed to provide a more comfortable feeling in an automobile. In the compressor, the inclination of the swash plate is varied according to thermal load to control an amount of refrigerant gas conveyed by the pistons to thereby accomplish precise temperature control, and at the same time, the inclination is continuously changed to attenuate rapid variation in engine torque due to the compressor.

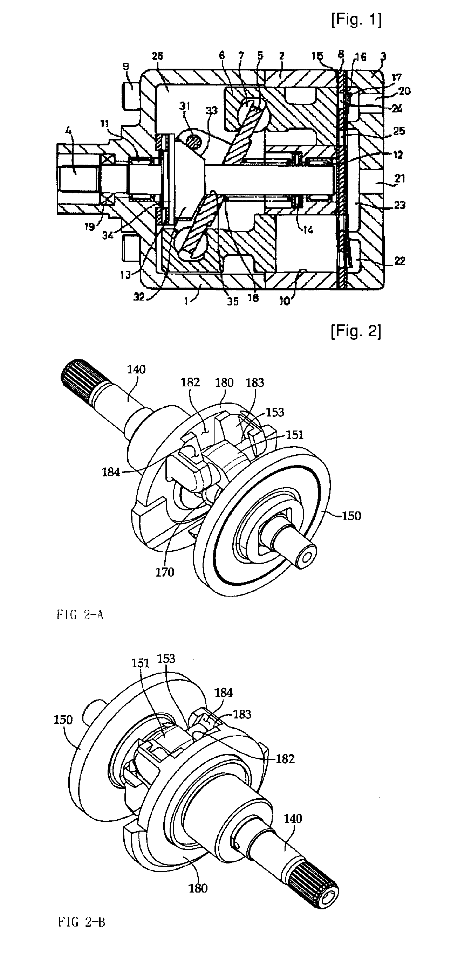

FIG. 1 illustrates a conventional variable displacement swash plate type compressor disclosed in Japanese Patent Laid-open Publication No. 1999-336657, the contents of which will be described hereinafter.

The conventional variable displacement swash plate type compressor includes a cylinder block 2 having a plurality of cylinder bores formed in parallel in a longitudinal direction of an inner peripheral surface thereof, a front housing 1 hermetically sealed in front of the cylinder block 2, and a rear housing 3 hermetically sealed behind the cylinder block 2 by interposing a valve plate 8 therebetween.

A swash plate chamber 26 is formed in the front housing 1, and a drive shaft 4 is disposed through the swash plate chamber 26. For this purpose, one end of the drive shaft 4 is rotatably supported by disposing a bearing 11 at the center of the front housing 1, and the other end of the drive shaft 4 is supported by bearings 12 and 14 in a center hole of the cylinder block 2.

In addition, a swash plate 5 having an inclination angle that varies while moving along a plate section 32 is installed at the drive shaft 4, and a spring 18 is interposed between the center hole of the cylinder block 2 and the swash plate 5 to resiliently support the swash plate 5.

Two plates are installed in parallel with a centerline of the drive shaft 4 at the front surface of the swash plate 5 when the swash plate 5 is disposed perpendicular to the drive shaft 4, and each plate has a circular hole. In addition, a pin 31 is inserted into the circular hole.

In addition, the plate section 32 has a guide surface 33 linearly inclined to the swash plate 5 on its outer surface. When the compressor operates, since the swash plate 5 is inclined, the pin 31 moves along the guide surface 33.

Further, since the plate section 32 is interposed between the plates, the swash plate 5 rotates together with the drive shaft 4.

When the swash plate 5 rotates in an inclined state, the pistons 6 inserted into the periphery surface of the swash plate 5 are reciprocated, through the shoes 7, in the cylinder bores of the cylinder block 2.

In addition, a suction chamber 23 and a discharge chamber 22 are formed at the rear housing 3, and a suction hole 25 and a discharge hole 24 are formed corresponding to the cylinder bores at the valve plate 8 interposed between the rear housing 3 and the cylinder block 2.

A suction lead and a discharge lead are formed at the suction hole 25 and the discharge hole 24 formed at the valve plate 8 to open and close the suction hole 25 and the discharge hole 24 using pressure variation due to the reciprocation of the pistons 6.

As shown in FIG. 1, in the conventional variable displacement swash plate type compressor, the inclination angle of the swash plate 5 is adjusted corresponding to a difference between the pressure in the swash plate chamber 26 and the suction pressure in the cylinder bores so that a stroke of the piston 6 connected to the swash plate 5 varies depending on the inclination angle of the swash plate 5 to vary a discharge capacity of the compressor.

However, the conventional variable displacement swash plate type compressor shown in Fig. 1 has a structure in which the swash plate is in direct contact with the drive shaft so that it cannot move smoothly on the sloped surface. In addition, the swash plate is moved on an incline with respect to the drive shaft resulting in severe vibration and noise from the contact surface or even damage of the contact surface. In addition, the guide pin may be lifted during operation to generate vibration noise and cause ineffectiveness.

US 5,231,914 discloses in Fig. 15 a swash plate type compressor according to the preamble of claim 1, wherein a sleeve is coupled to a swash plate by sleeve pins so that the swash plate can pivot about the sleeve pins when the inclination angle of the swash plate is to be adjusted. On axial movement (i.e. movement along the main shaft) sleeve and swash plate are firmly connected by the sleeve pins. The sleeve and the swash plate, therefore, are pushed together towards one end of the main shaft by a spring mounted on the shaft between the drive plate and the sleeve.

### Technical Solution

It is an object of the present invention to provide a variable displacement swash plate type compressor capable of facilitating inclination movement of a swash plate with respect to the drive shaft and reducing vibration noise to increase durability.

In order to accomplish the above object, there is provided a variable displacement swash plate type compressor comprising a cylinder block having a plurality of cylinder bores, a front housing disposed in a front end of the cylinder block to form a swash plate chamber, a drive shaft rotatably supported in the cylinder block, a lug plate disposed in the swash plate chamber of the front housing and fixedly provided on the drive shaft to be rotated therewith, a rear housing disposed in a rear end of the cylinder block and having a suction chamber and a discharge chamber in fluid communication with the cylinder bores through a suction valve and a discharge valve, a swash plate rotated by the lug plate and having a variable inclination angle relatively to the drive shaft, a sleeve provided with a joint hole through which the sleeve is installed on the drive shaft so as to be movable relatively to the drive shaft in the axial direction thereof, said sleeve being engaged with the inner surface of an insertion hole of the swash plate, projections provided on both sides of the sleeve and being engaged with the swash plate such that the swash plate can pivot about said projections to vary its inclination angle relatively to the drive shaft, a spring supported between the lug plate and the sleeve, and pistons slidably engaged with the swash plate to be reciprocated in the cylinder bores,
characterized in that said projections of the sleeve are provided as guide projections engaging guide grooves formed at the inner surface of the insertion hole of the swash plate such that the spring allows the sleeve to be in continuous contact with the swash plate.

In another aspect of the present invention, the variable displacement swash plate type compressor is characterized in that a first hooking groove is formed at a rear surface of the lug plate opposite to the swash plate, guide surfaces are formed at both sides of the first hooking groove, and second hooking grooves are formed inward along the guide surfaces, and
a hooking projection is formed at a front surface of the swash plate opposite to the lug plate to be engaged with the first hooking groove, and a guide pin is projected from both sides of the hooking projection to be relatively moved along the guide surfaces and the second hooking grooves of the lug plate.

Preferably, the guide projections have a cylindrical shape.

At this time, preferably, a hollow cylindrical bearing is rotatably installed around each guide projection.

Preferably, the sleeve has a convex outer surface in contact with the inner surface of the insertion hole of the swash plate.

Preferably, the guide pin has a cylindrical shape.

Preferably, a hollow cylindrical bearing is installed around the guide pin.

Preferably, a stopper is installed on the drive shaft behind the swash plate to maintain a minimum inclination angle.

### Brief Description of the Drawings

The foregoing and other objects, features and advantages of the present invention will become more apparent from the following detailed description when taken in conjunction with the accompanying drawings in which:
FIG. 1 is a longitudinal cross-sectional view of a conventional variable displacement swash plate type compressor;
FIG. 2A is a front perspective view of a peripheral structure of a swash plate in a variable displacement swash plate type compressor in accordance with the present invention;
FIG. 2B is a rear perspective view of a peripheral structure of a swash plate in a variable displacement swash plate type compressor in accordance with the present invention;
FIGS. 3A and 3B are partially sectional perspective views of FIG. 2A;
FIG. 4 is an exploded perspective view of FIG. 2A;
FIG. 5 is a perspective view of a lug plate of FIG. 4;
FIG. 6 is a perspective view of a swash plate of FIG. 4;
FIG. 7A is a longitudinal cross-sectional view of a variable displacement swash plate type compressor in accordance with the present invention, when a swash plate is in a minimum inclination angle;
FIG. 7B is a longitudinal cross-sectional view of a variable displacement swash plate type compressor in accordance with the present invention, when a swash plate is in a maximum inclination angle;
FIG. 8A is a side view of major components around the swash plate in FIG. 7A; and
FIG. 8B is a side view of major components around the swash plate in FIG. 7B.

### Best Mode for Carrying Out the Invention

Hereinafter, a preferred embodiment of the present invention will be described with reference to accompanying drawings.

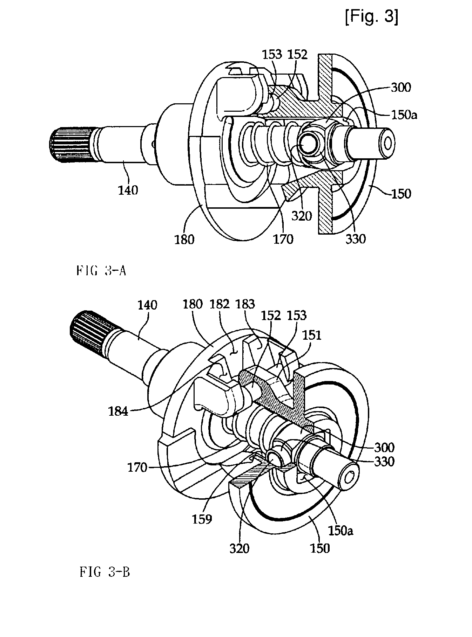

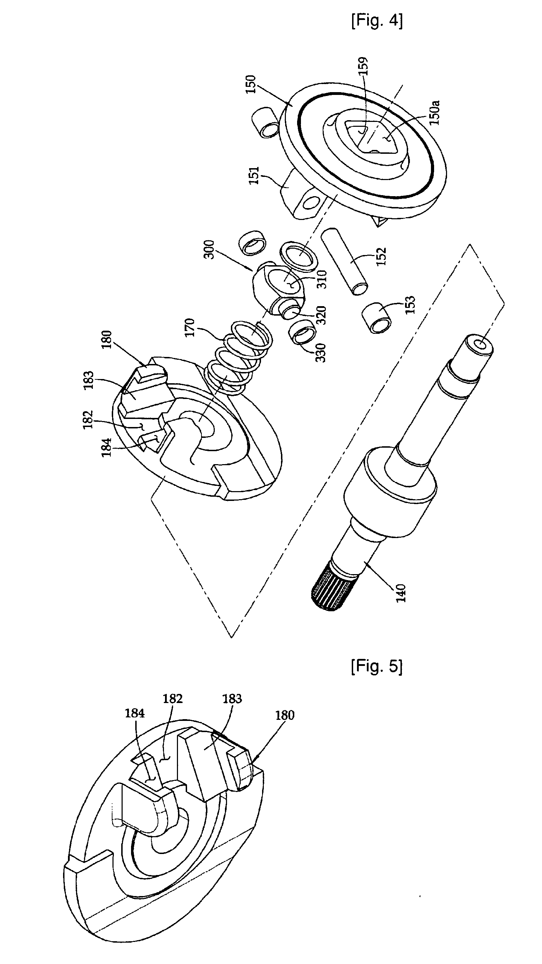

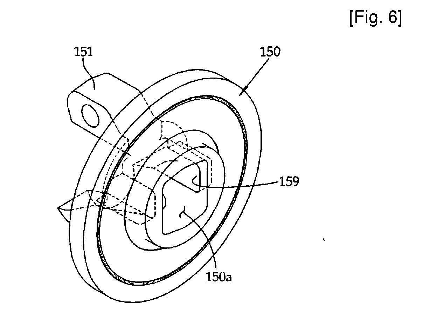

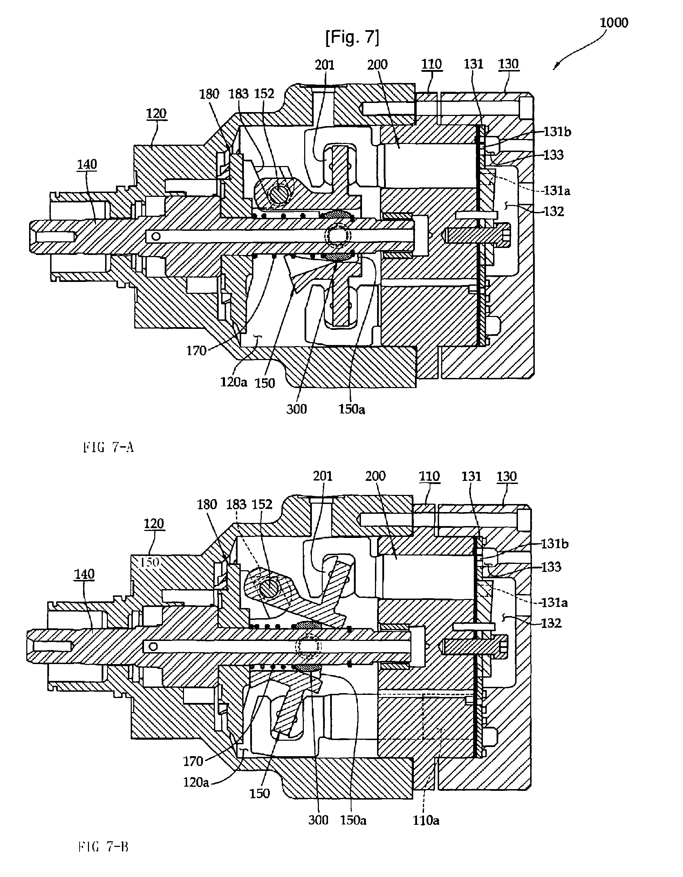

FIGS. 2 to 8 illustrate the structure of a variable displacement swash plate type compressor, to which a swash plate can be smoothly moved in an inclined state.

As shown, the variable displacement swash plate type compressor 1000 includes a cylinder block 110 having a plurality of cylinder bores 110a formed in parallel in a longitudinal direction on an inner peripheral surface thereof and composing an exterior part of the compressor, a front housing 120 disposed in a front end of the cylinder block 110 to form a swash plate chamber 120a, a drive shaft 140 rotatably supported in the cylinder block 110 and the front housing 120, a lug plate 180 disposed in the swash plate chamber 120a of the front housing 120 and fixedly installed on the drive shaft 140, a rear housing 130 having a suction chamber 132 and a discharge chamber 133 formed therein and disposed in a rear end of the cylinder block 110, a disk-shaped swash plate 150 rotated by the lug plate 180 so that inclination angle of the swash plate 150 is varied, a spring 170 supported between the lug plate 180 and the swash plate 150, and pistons 200 slidably engaged with the swash plate 150 by shoes 201 and reciprocally received in the cylinder bores 110a.

The rear housing 130 has the suction chamber 132 and the discharge chamber 133, and a valve plate 131 has a suction hole 131a for communicating the cylinder bores 110a and the suction chamber 132 and a discharge hole 131b for communicating the cylinder bores 110a and the discharge chamber 133.

In addition, a suction valve and a discharge valve are respectively installed in the suction hole 131a and the discharge hole 131b formed in the valve plate 131 to open and close the suction hole 131a and the discharge hole 131b using pressure variation due to the reciprocation of the pistons 180.

Other components of the compressor are similar to those of the conventional compressor, so their descriptions will be omitted.

In this embodiment, a sleeve 300 is installed between the drive shaft 140 and an inner surface of an insertion hole 150a of the swash plate 150.

The sleeve 300 is movably engaged with the drive shaft 140 in a longitudinal direction thereof. For this purpose, a joint hole 310 is formed in the sleeve 300.

In addition, the sleeve 300 is engaged with the inner surface of the insertion hole 150a of the swash plate 150. Moreover, the swash plate 150 is rotatable in an inclined manner in relative to the sleeve 300. For this, guide projections 320 are installed at both side surfaces of the sleeve 300 about the joint hole 310, and guide grooves 159 are formed at an inner surface of the insertion hole 150a of the swash plate 150 to be engaged with the guide projections 320 of the sleeve 300.

In the drawings, the guide projections 320 have cylindrical shapes, but not limited thereto, may have oval or polygonal shapes.

When the guide projections 320 have cylindrical shapes, bearings 330 may be installed around the projections so that the swash plate 150 can be more smoothly moved in an inclined manner.

In addition, an outer surface of the sleeve 300, which is in contact with the insertion hole 150a of the swash plate 150, has a convex surface to make the swash plate 150 smoothly move in an inclined manner.

Meanwhile, a first hooking groove 182 is formed at a rear surface of the lug plate 180 opposite to the swash plate 150, guide surfaces 183 are formed at both sides of the first hooking groove 182, and second hooking grooves 184 are formed inward along the guide surfaces 183.

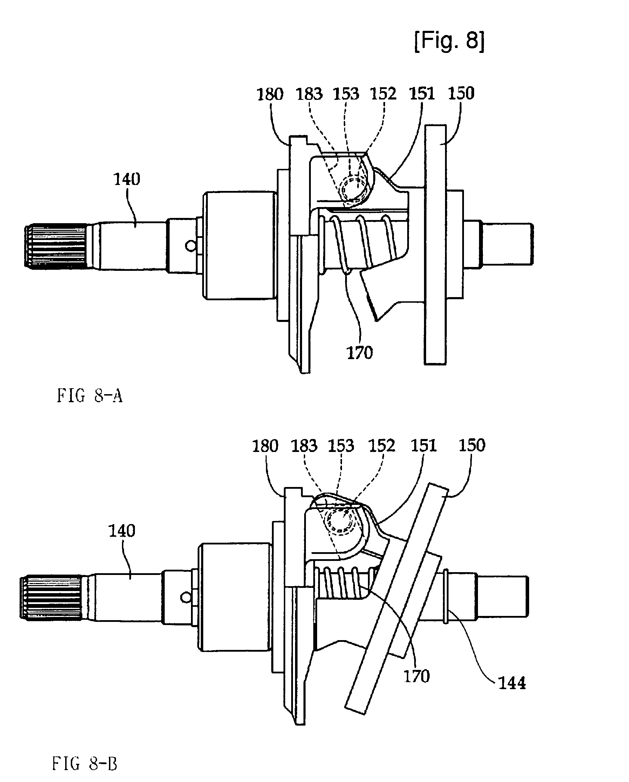

As shown in FIGS. 8A and 8B, when seen from a side view, the guide surfaces 183 are inclined downward from the upside toward the swash plate 150. The second hooking grooves 184 are formed along the guide surfaces 183 from external ends of the guide surfaces 183.

In addition, a hooking projection 151 is formed at a front surface of the swash plate 150 opposite to the lug plate 180 to be engaged with the first hooking groove 182, and a guide pin 152 is projected from both side surfaces of the hooking projection 151 to be relatively movable along the guide surfaces 183 and the second hooking grooves 184 of the lug plate 180. The guide pin 152 may be inserted into holes formed in the hooking projection 151 or directly fixed to the hooking projection 151 by welding.

Preferably, the guide pin 152 has an oval or circular cross-section. When the guide pin 152 has a circular cross-section, a hollow cylindrical bearing 153 is installed around the cylindrical guide pin 152 to make the swash plate 150 more smoothly move in an inclined manner.

During operation of the compressor, the first hooking groove 182 of the lug plate 180 and the hooking projection 151 of the swash plate 150 are engaged with each other to transmit rotational force.

In addition, since the second hooking grooves 184 are formed along the inclination of the guide surfaces 183, it is possible to prevent the swash plate 150 from being lifted and to make the swash plate 150 smoothly move in an inclined manner.

Meanwhile, the spring 170 is disposed between the rear surface of the lug plate 180 and the sleeve 300 to allow the sleeve 300 to be in continuous contact with the swash plate 150. Of course, the spring 170 prevents a sudden collision of the swash plate 150 and the lug plate 180.

Hereinafter, operation of the embodiment will be described.

As shown in FIGS. 2 to 8, first, rotational force from an engine (not shown) is transmitted through a pulley (not shown) to rotate the drive shaft 140. As a result, the lug plate 180 for power transmission that is fixed (or press fitted) to the drive shaft 140 is rotated. At the same time, the power is transmitted to the hooking projection 151 engaged with the first hooking groove 182 of the lug plate 180 to rotate the swash plate 150.

Then, the shoe 201 and the piston 200 are reciprocated in the cylinder due to the initial inclination angle of the swash plate 150 so that refrigerant gas is sucked from the suction chamber 132 to be compressed in the bore 110a and continuously discharged from the discharge chamber 133. At this time, the capacity of the discharged refrigerant gas is controlled by pressure regulation in the swash plate chamber which is performed by a pressure regulation valve (not shown).

When the pressure in the swash plate chamber 120a is decreased, the swash plate 150 is inclined due to a pressure difference between the swash plate chamber 120a and the cylinder bore 110a, and at the same time, the guide pin 152 of the swash plate 150 can be moved along the guide surfaces 183 and the second hooking grooves 184.

As a result of the operation, a top clearance between a bottom surface of the cylinder bore and the piston is substantially uniformly maintained, and variation of a rotational center point of the swash plate is minimized to optimally maintain volume efficiency of the compressor.

Meanwhile, when the inclination angle is continuously varied to form the maximum inclination angle as shown in FIG. 8B, a lower end of the swash plate is in contact with the lug plate.

In addition, when the drive shaft is not rotated, the swash plate 150 is recovered to the original position (the minimum inclination angle shown in FIG. 8A) by the spring between the swash plate and the lug plate. Here, movement of the swash plate 150 may be restricted by a stopper 144 installed on the drive shaft 140. In addition, using the spring, it is possible to prevent noise due to a collision between the swash plate and the lug plate that is resulted from sudden return of the inclination angle between the swash plate and the lug plate.

### Industrial Applicability

As can be seen from the foregoing, since the swash plate is engaged with the drive shaft by the sleeve and the rotational bearing, it is possible to make the swash plate smoothly move in an inclined manner and to reduce vibration noise.

In addition, since the swash plate is engaged with the lug plate by the guide pin and the rotational bearing, it is possible to make the swash plate smoothly move in an inclined manner and to reduce vibration noise.

In addition, since the swash plate is moved along the second hooking groove of the lug plate, it is possible to prevent the swash plate from being lifted or vibrated.

While this invention has been described in connection with what is presently considered to be the most practical and preferred embodiment, it is to be understood that the invention is not limited to the disclosed embodiment and the drawings, but, on the contrary, it is intended to cover various modifications and variations within the spirit and scope of the appended claims.

## Claims

1. A variable displacement swash plate type compressor (1000) comprising
a cylinder block (110) having a plurality of cylinder bores (110a),
a front housing (120) disposed at a front end of the cylinder block (110) to form a swash plate chamber (120a),
a drive shaft (140) rotatably supported in the cylinder block (110),
a lug plate (180) disposed in the swash plate chamber (120a) of the front housing (120) and fixedly provided on the drive shaft (140) to be rotated therewith,
a rear housing (130) disposed at a rear end of the cylinder block (110) and having a suction chamber (132) and a discharge chamber (133) in fluid communication with the cylinder bores (110a) through a suction valve and a discharge valve,
a swash plate (150) rotated by the lug plate (180) and having a variable inclination angle relatively to the drive shaft,
a sleeve (300) provided with a joint hole (310) through which the sleeve (300) is installed on the drive shaft (140) so as to be movable relatively to the drive shaft (140) in the axial direction thereof, said sleeve (300) being engaged with the inner surface of an insertion hole (150a) of the swash plate (150),
projections (320) provided on both sides of the sleeve (300) and being engaged with the swash plate (150) such that the swash plate (150) can pivot about said projections (320) to vary its inclination angle relatively to the drive shaft,
a spring (170) supported between the lug plate (180) and the sleeve (300), and
pistons (200) slidably engaged with the swash plate (150) to be reciprocated in the cylinder bores (110a),
**characterized in that**
said projections (320) of the sleeve (300) are provided as guide projections (320) engaging guide grooves (159) formed at the inner surface of the insertion hole (150a) of the swash plate (150) such that the spring (170) allows the sleeve (300) to be in continuous contact with the swash plate (150).

2. A variable displacement swash plate type compressor according to claim 1, **characterized in that**
a first hooking groove (182) is formed at a rear surface of the lug plate (180) opposite to the swash plate (150),
guide surfaces (183) are formed at both sides of the first hooking groove (182),
second hooking grooves (184) are formed inward along the guide surfaces (183),
a hooking projection (151) is formed at a front surface of the swash plate (150) opposite to the lug plate (180) to be engaged with the first hooking groove (182), and
a guide pin (152) is projected from both sides of the hooking projection (151) to be relatively moved along the guide surfaces (183) and the second hooking grooves (184) of the lug plate (180).

3. The variable displacement swash plate type compressor according to claim 1, **characterized in that** the guide projections (320) have a cylindrical shape.

4. The variable displacement swash plate type compressor according to claim 3, **characterized in that** a hollow cylindrical bearing (330) is rotatably installed around each guide projection (320).

5. The variable displacement swash plate type compressor according to claim 1, **characterized in that** the sleeve (300) has a convex outer surface in contact with the inner surface of the insertion hole (150a) of the swash plate (150).

6. The variable displacement swash plate type compressor according to claim 2, **characterized in that** the guide pin (152) has a cylindrical shape.

7. The variable displacement swash plate type compressor according to claim 6, **characterized in that** a hollow cylindrical bearing (153) is installed around the guide pin (152).

8. The variable displacement swash plate type compressor according to claim 1, **characterized in that** a stopper (144) is installed on the drive shaft (140) behind the swash plate (150).

## Patentansprüche

1. Taumelscheibenverdichter (1000) mit variabler Verdrängung, enthaltend:
einen Zylinderblock (110), der eine Vielzahl von Zylinderbohrungen (110a) aufweist,
ein Frontgehäuse (120), das an einem vorderen Ende des Zylinderblocks (110) angeordnet ist, um eine Taumelscheibenkammer (120a) zu bilden,
eine Antriebswelle (140), die im Zylinderblock (110) drehbar gelagert ist,
eine Ansatzplatte (180), die in der Taumelscheibenkammer (120a) des Frontgehäuses (120) angeordnet und starr an der Antriebswelle (140) vorgesehen ist, so dass sie sich mit ihr mitdreht,
ein Rückgehäuse (130), das an einem hinteren Ende des Zylinderblocks (110) angeordnet ist und einen Saugraum (132) und einen Druckraum (133) angeordnet ist, die über ein Saugventil und ein Druckventil in Fließverbindung mit den Zylinderbohrungen (110a) stehen,
eine Taumelscheibe (150), die von der Ansatzplatte (180) gedreht wird und einen variablen Neigungswinkel zur Antriebswelle aufweist,
eine Hülse (300), die mit einem Verbindungsloch (310) versehen ist, über das die Hülse (300) auf der Antriebswelle (140) angebracht ist, so dass sie relativ zur Antriebswelle (140) in deren axialer Richtung beweglich ist, wobei die Hülse (300) mit der Innenfläche eines Einstecklochs (150a) der Taumelscheibe (150) in Eingriff steht,
Vorsprünge (320), die auf beiden Seiten der Hülse (300) vorgesehen sind und mit der Taumelscheibe (150) derart in Eingriff stehen, dass die Taumelscheibe (150) um die Vorsprünge (320) schwenken kann, so dass sich ihr Neigungswinkel relativ zur Antriebswelle ändert,
eine Feder (170), die zwischen der Ansatzplatte (180) und der Hülse (300) gehalten wird, und
Kolben (200), die gleitend mit der Taumelscheibe (150) in Eingriff stehen, so dass sie sich in den Zylinderbohrungen (110a) hin- und herbewegen,
**dadurch gekennzeichnet, dass**
die Vorsprünge (320) der Hülse (300) als Führungsvorsprünge (320) vorgesehen sind, die mit an der Innenfläche des Einstecklochs (150a) der Taumelscheibe (150) ausgebildeten Führungsschlitzen (159) derart in Eingriff stehen, dass die Feder (170) der Hülse (300) ermöglicht, in kontinuierlichem Kontakt mit der Taumelscheibe (150) zu stehen.

2. Taumelscheibenverdichter mit variabler Verdrängung nach Anspruch 1, bei dem
eine erste Einhakrille (182) an einer Rückseite der Ansatzplatte (180) gegenüber der Taumelscheibe (150) ausgebildet ist,
Führungsflächen (183) an beiden Seiten der ersten Einhakrille (182) ausgebildet sind,
zweite Einhakrillen (184) nach innen entlang der Führungsflächen (183) ausgebildet sind,
ein Einhakvorsprung (151) an einer Vorderseite der Taumelscheibe (150) gegenüber der Ansatzplatte (180) ausgebildet ist, so dass sie mit der ersten Einhakrille (182) in Eingriff kommt, und
ein Führungsstift (152) von beiden Seiten des Einhakvorsprungs (151) hervorspringt, so dass er entlang der Führungsflächen (183) und den zweiten Einhakrillen (184) der Ansatzplatte (180) relativ bewegt wird.

3. Taumelscheibenverdichter mit variabler Verdrängung nach Anspruch 1, bei dem die Führungsvorsprünge (320) eine zylindrische Form aufweisen.

4. Taumelscheibenverdichter mit variabler Verdrängung nach Anspruch 3, bei dem ein Hohlzylinderlager (330) drehbar um jeden Führungsvorsprung (320) angebracht ist.

5. Taumelscheibenverdichter mit variabler Verdrängung nach Anspruch 1, bei dem die Hülse (300) eine konvexe Außenfläche aufweist, die in Kontakt mit der Innenfläche des Einstecklochs (150a) der Taumelscheibe (150) steht.

6. Taumelscheibenverdichter mit variabler Verdrängung nach Anspruch 2, bei dem der Führungsstift (152) eine Zylinderform aufweist.

7. Taumelscheibenverdichter mit variabler Verdrängung nach Anspruch 6, bei dem ein Hohlzylinderlager (153) um den Führungsstift (152) angebracht ist.

8. Taumelscheibenverdichter mit variabler Verdrängung nach Anspruch 1, bei dem an der Antriebswelle (140) hinter der Taumelscheibe (150) ein Anschlag (144) angebracht ist.

## Revendications

1. Compresseur du type à plateau oscillant à déplacement variable (1000), comprenant
un bloc-cylindres (110) ayant une série d'alésages de cylindre (110a),
un carter avant (120) disposé au niveau de l'extrémité avant du bloc-cylindres (110) pour former une chambre de plateau oscillant (120a),
un arbre d'entraînement (140) supporté de manière rotative par le bloc-cylindres (110),
une plaque d'ergot (180) disposée dans la chambre de plateau oscillant (120a) du carter avant (120) et placée sur l'arbre d'entraînement (140) de manière à tourner avec lui,
un carter arrière (130) disposé au niveau de l'extrémité arrière du bloc-cylindres (110) et ayant une chambre d'aspiration (132) et une chambre de décharge (133) en communication fluide avec les alésages de cylindre (110a) par une soupape d'aspiration et une soupape de décharge,
un plateau oscillant (150) mis à tourner par la plaque d'ergot (180) et ayant un angle d'inclinaison variable par rapport à l'arbre d'entraînement,
un manchon (300) muni d'un orifice de jonction (310), par lequel le manchon (300) est installé sur l'arbre d'entraînement (140), de manière à pouvoir être déplacé par rapport à l'arbre d'entraînement (140) selon sa direction axiale, ledit manchon (300) se trouvant en engagement avec la surface intérieure d'un orifice d'insertion (150a) du plateau oscillant (150),
des saillies (320) disposées sur les deux côtés du manchon (300) et se trouvant en engagement avec le plateau oscillant (150) de sorte que le plateau oscillant (150) peut pivoter autour desdites saillies (320) pour varier son angle d'inclinaison par rapport à l'arbre d'entraînement,
un ressort (170) supporté entre la plaque d'ergot (180) et le manchon (300), et
des pistons (200) mis en prise de manière coulissante avec le plateau oscillant (150) et mus d'un mouvement de va-et-vient dans les alésages de cylindre (110a),
**caractérisé en ce que** lesdites saillies (320) du manchon (300) sont munies de saillies de guidage (320) s'engageant dans des rainures de guidage (159) formées sur la surface interne de l'orifice d'insertion (150a) du plateau oscillant (150) de sorte que le ressort (170) permet au manchon (300) d'être en contact continu avec le plateau oscillant (150).

2. Compresseur du type à plateau oscillant à déplacement variable selon la revendication 1, **caractérisé en ce que**
une première rainure d'accrochage (182) est formée sur la surface arrière de la plaque d'ergot (180), de manière opposée au plateau oscillant (150),
des surfaces de guidage (183) sont formées sur les deux côtés de la première rainure d'accrochage (182),
des deuxièmes rainures d'accrochage (184) sont formées vers l'intérieur, le long des surfaces de guidage (183),
une saillie d'accrochage (151) est formée sur une surface frontale du plateau oscillant (150), de manière opposée à la plaque d'ergot (180), de manière à s'engager avec la première rainure d'accrochage (182),
une broche de guidage (152) s'étend depuis les deux côtés de la saillie d'accrochage (151) pour être déplacée le long des surfaces de guidage (183) et des deuxièmes rainures d'accrochage (184) de la plaque d'ergot (180).

3. Compresseur du type à plateau oscillant à déplacement variable selon la revendication 1, **caractérisé en ce que** les saillies de guidage (320) sont de forme cylindrique.

4. Compresseur du type à plateau oscillant à déplacement variable selon la revendication 4, **caractérisé en ce qu'**un appui cylindrique creux (330) est installé de manière rotative autour de chaque saillie de guidage (320).

5. Compresseur du type à plateau oscillant à déplacement variable selon la revendication 1, **caractérisé en ce que** le manchon (300) présente une surface externe convexe en contact avec la surface interne de l'orifice d'insertion (150a) du plateau oscillant (150).

6. Compresseur du type à plateau oscillant à déplacement variable selon la revendication 2, **caractérisé en ce que** la broche de guidage (152) a une forme cylindrique.

7. Compresseur du type à plateau oscillant à déplacement variable selon la revendication 6, **caractérisé en ce qu'**un support cylindrique creux (153) est installé autour de la broche de guidage (152).

8. Compresseur du type à plateau oscillant à déplacement variable selon la revendication 1, **caractérisé en ce qu'**un arrêt (144) est installé sur l'arbre d'entraînement (150) derrière le plateau oscillant (150).
